# EUROPEAN PATENT SPECIFICATION

(11) **EP 0 464 007 B1**
(45) Date of publication and mention of the grant of the patent: **16.03.1994**
(21) Application number: 91830282.9
(22) Date of filing: 25.06.1991
(51) Int. Cl.: B60N 2/44, B29C 33/38

(54) **A method of producing a container for padding for the squabs of seats to be subjected to tests and seat squab including such a container**
Verfahren zum Herstellen von Schalen für die Polsterung von Sitzkissen für Testzwecke und Sitzpolster mit einer derartigen Schale
Procédé pour produire des conteneurs pour la rembourrage de coussins de sièges à épreuve et rembourrage pour sièges avec un tel conteneur

(30) Priority: 29.06.1990 IT 6747790
(43) Date of publication of application: 02.01.1992
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 308 374
- EP-A- 0 314 059
- DE-A- 3 218 524
- DE-A- 3 935 890
- FR-A- 2 560 110
- GB-A- 1 036 226
- "Devices for use in defining and measuring vehicle seating accomodation" - SAE J826, May 87; available from SAE as J1100JUL79; Society of Automotive Engineers, Inc.; 400 Commonwealth Drive; Warrendale, PA 15096 (US); pages 34.52 - 34.56

## Description

The present invention relates to the manufacture of parts for seats such as, for example, motor-vehicle seats.

More specifically, the invention relates to the manufacture of so-called containers for the seat portions (the "squabs") of such seats which as such are shown e.g. in EP-A-0 308 374.

The term "container" as used in the present description and the claims which follow is intended in general to identify the dish-shaped structural part or base which supports the padding of the squab.

The standard bases used industrially, both in the automotive field and in the furnishing sector, are generally found wholly satisfactory when used with fairly thick padding.

In some applications, particularly in the automotive sector, it is often desirable to use thinner padding (for example, of a layered nature) in order, for example, to lower the motorist's line of sight (the H point).

In pursuing this object, it may be noticed that a gradual reduction in the thickness of the padding eventually conflicts with the need to ensure that the squab as a whole can pass the appraisal tests prescribed by the prevailing standards (for example, the SAE standards for vehicles) which are based on the use of manikins.

In this connection, it should be pointed out that the lowering of the line of sight is limited not so much by the type of padding used as by the undesired contact which is sooner or later established between the structure of the container and the test manikin. In particular, the continued lowering of the H point eventually creates pressure points where the padding, which is very thin, is subject to very high fatigue stress due to compression and shear forces, particularly at the sides. It should also be pointed out that the pressures are distributed unevenly since some parts of the padding are overloaded whilst there is very little load in other regions, particularly at the centre of the seat. Moreover, it should be borne in mind that the problems arising in the relationship between the container and the test manikin are much more marked than those which occur during the normal use of the squab and the seat of which it forms part by a passenger.

In fact, a passenger's body can mould itself so as to fit the cross-section of the container whereas the manikin, which is stiff and non-deformable, does not adapt itself.

Even with a certain adaptability, a badly fitting squab container eventually creates pressure points on the sides of the passenger's thighs and buttocks which are very damaging to his functional anatomy since they can give rise to pressure-related problems particularly affecting the hip joints. These problems cause local obstruction of the blood circulation and also create discomfort affecting the nerve tracts and reduced lymph drainage.

In summary, therefore, when the standard manikin prescribed for appraisal according to the SAE standards ("Devices for use in defining and measuring vehicle seating accomodation"- SAE J 826, May 87; available from SAE as J 1100 JUL 79; Society of Automotive Engineers, Ine.; 400 Common wealth Drive; Warrendale, PA 15 096 (US); pages 34.52 - 34.56) is used on conventional containers to test the possible lowering of the H point, an unacceptable reduction of the spaces (particularly at the sides) between the actual structures of the containers and the manikin is found; whatever the type of covering padding used, this condition is incompatible with the provision of sufficient comfort and with the passing of fatigue tests. The problems affecting the manikin are transferred directly to the driving and travelling conditions for motorists, although to a lesser extent.

A possibility of obtaining a master model from a styling body for use in making dies is known from GB-A-1 036 226.

The object of the present invention is therefore to provide a method of producing containers for squabs which achieves excellent results in terms of the reduction in the thickness of the padding and the consequent lowering of the line of sight, without giving rise to the problems explained above.

According to the present invention, this object is achieved by virtue of a method having the characteristics called forth in claim 1.

The invention will now be described purely by way of non-limiting example with reference to the appended drawings including two figures, indicated 1 and 2, showing two successive steps of the method of the invention.

In the drawings, a manikin of the type used for appraising seats, and particularly their squabs, in accordance with the SAE standards currently prevailing in the automotive sector is generally indicated M.

As stated, the invention specifically confronts the problem of producing the so-called container for the squab.

For this purpose, the present invention is based essentially on the principle that the container in question is formed and shaped as an impression of the lower portion C of the manikin M to which a layer of material simulating a pad has previously been applied. This is done according to the criteria which will be explained further below.

In summary, the manikin M is prepared by the padding of its lower region C with a layer of material 1 (for example, resin or other easily-worked material) of a more or less uniform thickness preferably corresponding to the thickness assumed under load by the thinnest padding which will subsequently be used on the squab.

In this connection, it should be noted that, although for the purposes of the method the layer of material 1 simulates the padding of the squab, it may be made of any material, even a rigid material which is not itself suitable for padding.

As regards the determination of the expected thickness under load, the necessary experimental values may easily be defined from time to time in dependence on the specific requirements of function and use.

In this connection, it should be remembered that the padding usually tends to be thicker and more elaborate for cars (or seats in general) of a more prestigious class and thinner for vehicles or applications in the cheaper ranges and to reach minimum values in racing vehicles (with extremely low H points).

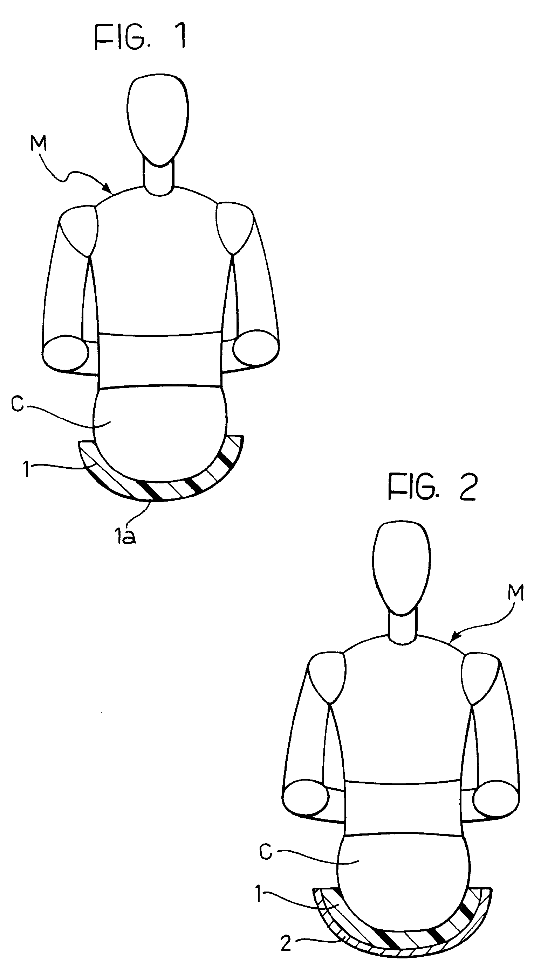

The actual container or, more correctly, is mould or die 2 can then be formed (Figure 2) as an impression of the outer surface 1a of the layer of material 1, as shown schematically in Figure 2.

In practice, the impression thus produced constitutes a pattern or model for use in the manufacture of containers from metal, rigid plastics material, etc. on an industrial scale.

The die 2 is typically made of a material which can be modelled easily, for example, glass-reinforced plastics which can be shaped by direct application to the layer of material 1.

The container model thus produced is suitable for use with a very wide range of paddings from the simplest to the most elaborate according to the range for which it is to be used and the style requirements to be fulfilled.

In any case, the production criteria used prevent the creation of loaded areas in the squab using the container in question. The padding thus lasts considerably longer when subjected to fatigue tests.

The production method described also enables a maximum reduction in the thickness of the padding far beyond that which can be achieved in containers characterised by an uneven internal profile.

The very even nature of the external surface 1a of the layer of material 1 and hence of the interior of the container formed according to the criteria described above, without any internal recesses or corners, means that, when the padding is formed from foamed materials or the like, the materials used can be more homogeneous and less padding material can therefore be used, resulting in considerable economies in large-scale production.

Difficulties cannot arise when the squab is being tested since it has actually been produced from the shape of the manikin used to carry out the tests.

The uniform distribution of the padding over the entire surface of the squab avoids local pressure points and the adverse consequences described above.

In general, the design of the container does not constitute a constraint as regards the lowering of the H point and the problem is reduced to the selection of the type of padding to be used.

## Claims

1. A method of producing a container for padding for the squabs of seats to be subjected to tests carried out with a test manikin (M) comprising the steps of:
- covering the portion (C) of the manikin (M) which is intended to cooperate with the squab with a layer of material (1) which simulates the padding of the squab and which has an outer surface (1a) facing away from the manikin (M), and
- producing the shape (2) of the container as an impression of the outer surface (1a),
- said layer of material being of a more or less uniform thickness preferably corresponding to the thickness assumed under load by the thinnest padding which will subsequently be used on the squab.

2. A method according to Claim 1, characterised in that said outer surface (la) is substantially smooth.

3. A method accordinq to Claim 1 or Claim 2, characterised in that layer of the material (1) simulates the padding under the maximum expected compression loading.

4. A method according to any one of the preceding claims, characterised in that the shape (2) is made of a mass of material which can be modelled.

5. A method according to Claim 4, characterised in that the material which can be modelled is constituted essentially by glass-reinforced plastics.

6. A seat squab particularly for motor vehicles including a container for padding, characterised in that the container is manufactured from a die (2) produced according to the method of any one of Claims 1 to 5.

## Patentansprüche

1. Verfahren zur Herstellung eines Behälters für Polsterung für die Sitzteile von Sitzen, die mit einer Testpuppe (M) ausgeführten Tests unterzogen werden sollen,
umfassend die Schritte:
- Bedecken des Abschnitts (C) der Puppe (M), der zum Zusammenwirken mit dem Sitzteil gedacht ist, mit einer Materialschicht (1), welche die Polsterung des Sitzteils simuliert und welche eine von der Puppe (M) wegweisende Außenfläche (1a) aufweist, und
- Herstellen der Form (2) des Behälters als Abdruck der Außenfläche (1a),
- wobei die Materialschicht eine mehr oder weniger gleichförmige Dicke aufweist, die vorzugsweise der von der dünnsten, nachfolgend auf dem Sitzteil verwendeten Polsterung unter Last angenommenen Dicke entspricht.

2. Verfahren nach Anspruch 1, **dadurch gekennzeichnet,** daß die Außenfläche (1a) im wesentlichen glatt ist.

3. Verfahren nach Anspruch 1 oder Anspruch 2, **dadurch ge****kennzeichnet,** daß die Materialschicht (1) die Polsterung unter der maximalen erwarteten Kompressionsbelastung simuliert.

4. Verfahren nach einem der vorhergehenden Ansprüche, **dadurch gekennzeichnet,** daß die Form (2) aus einer Materialmasse gefertigt ist, die modelliert werden kann.

5. Verfahren nach Anspruch 4, **dadurch gekennzeichnet**, daß das Material, das modelliert werden kann, im wesentlichen von glas-verstärkten Kunststoffen gebildet ist.

6. Sitzteil, insbesondere für Kraftfahrzeuge, umfassend einen Behälter für Polsterung, **dadurch gekennzeichnet,** daß der Behälter aus einer Matrize (2) gefertigt ist, die gemäß dem Verfahren nach einem der Ansprüche 1 bis 5 hergestellt ist.

## Revendications

1. Procédé pour fabriquer une coque pour la garniture des coussins de sièges qui doivent être soumis à des tests pratiqués avec un mannequin de test (M), comprenant les étapes consistant à :
- couvrir la partie (C) du mannequin (M) qui est destinée à coopérer avec le coussin, avec une couche de matériau (1) qui simule la garniture du coussin et qui a une surface extérieure (1a) dirigée en éloignement du mannequin (M), et
- produire la forme (2) de la coque en tant qu'impression de la surface extérieure (1a),
- ladite couche de matériau ayant une épaisseur plus ou moins uniforme qui correspond de préférence à l'épaisseur prise sous charge par la garniture la plus mince qui sera utilisée ensuite sur le coussin.

2. Procédé selon la revendication 1, caractérisé en ce que ladite surface extérieure (1a) est sensiblement régulière.

3. Procédé selon l'une ou l'autre des revendications 1 et 2, caractérisé en ce que la couche de matériau (1) simule la garniture sous la charge de compression maximum attendue.

4. Procédé selon l'une quelconque des revendications précédentes, caractérisé en ce que la forme (2) est réalisée en une masse de matériau qui peut être modelé.

5. Procédé selon la revendication 4, caractérisé en ce que le matériau qui peut être modelé est constitué essentiellement par une matière plastique renforcée par des fibres de verre.

6. Coussin de siège, en particulier pour véhicule automobile, comprenant une coque pour garniture, caractérisé en ce que la coque est fabriquée à partie d'une matrice (2) produite selon le procédé de l'une quelconque des revendications 1 à 5.
